(19) Europäisches Patentamt
European Patent Office
Office européen des brevets

(11) **EP 4 137 985 A1**

(12) **EUROPEAN PATENT APPLICATION**

(43) Date of publication:
**22.02.2023 Bulletin 2023/08**

(21) Application number: **22164719.1**

(22) Date of filing: **28.03.2022**

(51) International Patent Classification (IPC):
**G06F 40/216** (2020.01)      **G06F 40/35** (2020.01)
**G10L 15/22** (2006.01)

(52) Cooperative Patent Classification (CPC):
**G10L 15/22; G06F 40/216; G06F 40/35**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.08.2021   CN 202110961950**

(71) Applicant: **BEIJING BAIDU NETCOM SCIENCE
TECHNOLOGY CO., LTD.
Beijing 100085 (CN)**

(72) Inventors:
• **HUANG, Jizhou
Beijing, 100085 (CN)**
• **WANG, Shaolei
Beijing, 100085 (CN)**
• **WANG, Haifeng
Beijing, 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **INTELLIGENT VOICE INTERACTION METHOD AND APPARATUS, DEVICE AND COMPUTER STORAGE MEDIUM**

(57)      A specific implementation of the present disclosure involves: acquiring first conversational voice entered by a user; and inputting the first conversational voice into a voice interaction model, to acquire second conversational voice generated by the voice interaction model for the first conversational voice for return to the user. The voice interaction model includes: a voice encoding submodel configured to encode the first conversational voice and historical conversational voice of a current session, to obtain voice state embedding; a state memory network configured to obtain embedding of at least one preset attribute by using the voice state embedding; and a voice generation submodel configured to generate the second conversational voice by using the voice state embedding and the embedding of the at least one preset attribute. The at least one preset attribute is preset according to information of a verified object. Intelligent data verification is realized according to the present disclosure.

FIG.1

## Description

### Field of the Disclosure

The present application relates to the field of computer technologies, and in particular, to voice, big data and deep learning technologies in the field of artificial intelligence technologies.

### Background of the Disclosure

With the rapid development and continuous popularization of computer application technologies, people's clothing, food, housing and transportation are increasingly dependent on a variety of applications. Most of the applications are based on big data in various fields. Authenticity and accuracy of the data greatly affect application effects and user experience. For example, in map applications, geo-location points may be a Point Of Interest (POI), an Area Of Interest (AOI) or a Region Of Interest (ROI) in a larger range on the map, especially places that are closely related to people's lives, such as schools, banks, restaurants, hospitals and supermarkets. A geo-location generally includes information such as a name, a coordinate, an address, a category and a phone number. Geo-location information is generally acquired through field collection, Internet data acquisition and user reporting. Due to the rapid development of urban construction and changes in business unit planning, the geo-location information may also change frequently.

Therefore, data verification is an important part in a large number of application scenarios such as map applications.

### Summary of the Disclosure

In view of the above, the present application provides an intelligent voice interaction method and apparatus, a device and a computer storage medium, so as to intelligently realize data verification.

In a first aspect, the present application provides an intelligent voice interaction method, including:

> acquiring first conversational voice entered by a user; and
> inputting the first conversational voice into a voice interaction model, to acquire second conversational voice generated by the voice interaction model for the first conversational voice for return to the user;
> wherein the voice interaction model includes:
>
> > a voice encoding submodel configured to encode the first conversational voice and historical conversational voice of a current session, to obtain voice state Embedding;
> > a state memory network configured to obtain Embedding of at least one preset attribute by using the voice state Embedding, wherein the at least one preset attribute is preset according to information of a verified object; and
a voice generation submodel configured to generate the second conversational voice by using the voice state Embedding and the Embedding of the at least one preset attribute.

In a second aspect, the present application provides a method for acquiring a voice interaction model, including:

> acquiring training data, the training data including conversational voice pairs in a same session, a conversational voice pair including user voice and response voice fed back to a user; and
> training the voice interaction model by taking the user voice as input to the voice interaction model, a training objective including minimizing a difference between the response voice outputted by the voice interaction model and the corresponding response voice in the training data; wherein the voice interaction model includes:
>
> > a voice encoding submodel configured to encode the user voice and historical conversational voice of the same session, to obtain voice state Embedding;
> > a state memory network configured to obtain Embedding of at least one preset attribute by using the voice state Embedding, wherein the at least one preset attribute is preset according to information of a verified object; and
> > a voice generation submodel configured to generate the response voice by using the voice state Embedding and the Embedding of the at least one preset attribute.

In a third aspect, the present application provides an intelligent voice interaction apparatus, including:

> a voice acquisition unit configured to acquire first conversational voice entered by a user; and
> a voice generation unit configured to input the first conversational voice into a voice interaction model, to acquire second conversational voice generated by the voice interaction model for the first conversational voice for return to the user;
> wherein the voice interaction model includes:
>
> > a voice encoding submodel configured to encode the first conversational voice and historical conversational voice of a current session, to obtain voice state Embedding;
> > a state memory network configured to obtain Embedding of at least one preset attribute by using the voice state Embedding, wherein the at least one preset attribute is preset according to information of a verified object; and

a voice generation submodel configured to generate the second conversational voice by using the voice state Embedding and the Embedding of the at least one preset attribute.

In a fourth aspect, the present application further provides an apparatus for acquiring a voice interaction model, including:

a training data acquisition unit configured to acquire training data, the training data including conversational voice pairs in a same session, a conversational voice pair including user voice and response voice fed back to a user; and

a first model training unit configured to train the voice interaction model by taking the user voice as input to the voice interaction model, a training objective including minimizing a difference between the response voice outputted by the voice interaction model and the corresponding response voice in the training data;

wherein the voice interaction model includes:

a voice encoding submodel configured to encode the user voice and historical conversational voice of the same session, to obtain voice state Embedding;

a state memory network configured to obtain Embedding of at least one preset attribute by using the voice state Embedding, wherein the at least one preset attribute is preset according to information of a verified object; and

a voice generation submodel configured to generate the response voice by using the voice state Embedding and the Embedding of the at least one preset attribute.

In a fifth aspect, the present application further provides an electronic device, including:

at least one processor; and

a memory in communication connection with the at least one processor; wherein

the memory stores instructions executable by the at least one processor, and the instructions are executed by the at least one processor to enable the at least one processor to perform the method as described in any one of the above aspects.

In a sixth aspect, the present application further provides a non-transitory computer-readable storage medium storing computer instructions, wherein the computer instructions are configured to cause a computer to perform the method as described in any one of the above aspects.

Other effects of the above alternatives are described below in the context with respect to specific embodiments.

**Brief Description of Drawings**

The accompanying drawings are intended to provide a better understanding of the solutions and do not constitute a limitation on the present application. In the drawings,

FIG. 1 is a flowchart of an intelligent voice interaction method according to an embodiment of the present disclosure;
FIG. 2 is a schematic diagram of a voice interaction architecture according to an embodiment of the present disclosure;
FIG. 3 is a schematic structural diagram of a voice interaction model according to an embodiment of the present disclosure;
FIG. 4 is a diagram of an operating principle of a state memory network according to an embodiment of the present disclosure;
FIG. 5 is a flowchart of a method for acquiring a voice interaction model according to an embodiment of the present disclosure;
FIG. 6 is a structural diagram of an intelligent voice interaction apparatus according to an embodiment of the present disclosure;
FIG. 7 is a structural diagram of an apparatus for acquiring a voice interaction model according to an embodiment of the present disclosure; and
FIG. 8 is a block diagram of an electronic device configured to implement embodiments of the present disclosure.

**Detailed Description of Preferred Embodiments**

Exemplary embodiments of the present application are illustrated below with reference to the accompanying drawings, which include various details of the present application to facilitate understanding and should be considered only as exemplary. Therefore, those of ordinary skill in the art should be aware that various changes and modifications can be made to the embodiments described herein without departing from the scope and spirit of the present application. Similarly, for clarity and simplicity, descriptions of well-known functions and structures are omitted in the following description.

Data verification is generally performed manually at present. For example, geo-location data is generally verified by field collection and human customer service call. Field collection verification refers to verification of geo-location information by survey, photographing and inquiry when a map information collector arrives at a geo-location point on site. The solution of field collection verification is widely used in the construction of geographic information in the early non-information age, but the solution requires a lot of manpower and material resources, which is not only inefficient, but also requires professional ability of operators, is not suitable for large-scale data operations and has been basically abandoned at present.

The human customer service call verification means that a customer service calls the geo-location point and verifies information by human conversation inquiry. Verification personnel may obtain information feedback by phone without going to the field. It is easier for the human customer service to obtain accurate information through direct communication with a user. At the same time, the solution is easy to operate and has no requirement on special professional ability of the human customer service. For example, the human customer service may ask a name, an address, business hours and other attribute information of the geo-location point based on existing information, and label, through feedback of the other party, whether each piece of information of the geo-location point is correct and updated.

However, the human customer service call verification requires a large number of manual participation, labor costs are high, efficiency is low, and a person can only verify 100 to 200 pieces a day. Moreover, humans are easy to get tired and emotional, it is difficult to ensure a long time of stable work.

Although there are some related technologies that can realize intelligent voice interactive inquiry for information verification, the whole system is required to be composed of a large number of models such as a voice recognition model, a semantic understanding model, a conversation management model, a natural language generation model and a voice synthesis model. The models depend on one another, and errors from upstream models may cascade to downstream models, resulting in error accumulation. For example, if the semantic understanding model misunderstands an intent, a subsequent conversation may be completely out of control.

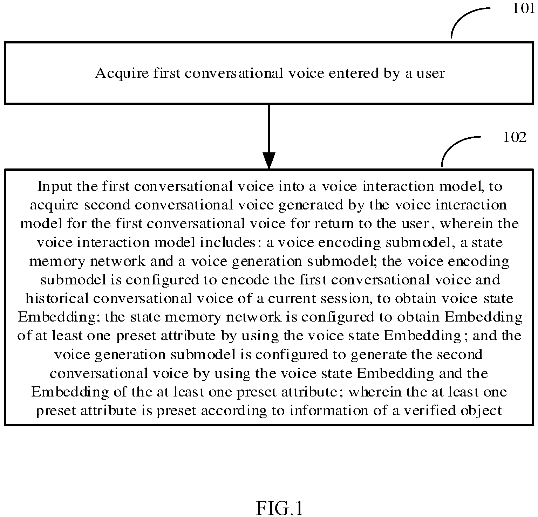

FIG. 1 is a flowchart of an intelligent voice interaction method according to an embodiment of the present disclosure. The method may be performed by a voice interaction apparatus. The apparatus may be an application located on a server side or a functional unit in an application located on a server side such as a plug-in or a Software Development Kit (SDK), or located in a terminal device with strong computing capability, which is not particularly limited herein in the embodiment of the present invention. If the method is performed on the server side, the server may be a single server or a server cluster composed of a plurality of servers. The server may be a cloud server, also known as a cloud computing server or cloud host, which is a host product in the cloud computing service system to solve the problems of difficult management and weak business scalability in the traditional physical host and a virtual private server (VPS). As shown in FIG. 1, the method mainly includes the following steps.

In 101, first conversational voice entered by a user is acquired.

In 102, the first conversational voice is inputted into a voice interaction model, to acquire second conversational voice generated by the voice interaction model for the first conversational voice for return to the user.

The voice interaction model includes: a voice encoding submodel, a state memory network and a voice generation submodel. The voice encoding submodel is configured to encode the first conversational voice and historical conversational voice of a current session, to obtain voice state Embedding. The state memory network is configured to obtain Embedding of at least one preset attribute by using the voice state Embedding. The voice generation submodel is configured to generate the second conversational voice by using the voice state Embedding and the Embedding of the at least one preset attribute. The at least one preset attribute is preset according to information of a verified object.

As can be seen from the above technical solution, in the above manner, for first conversational voice entered by a user, second conversational voice can be generated based on attributes preset according to information of a verified object. The automated end-to-end voice generation manner enables intelligent data verification.

The verified object involved in the embodiment of the present disclosure may be a verified object in any field, for example, geo-location points in map applications, transaction information and commodity information in e-commerce, and so on.

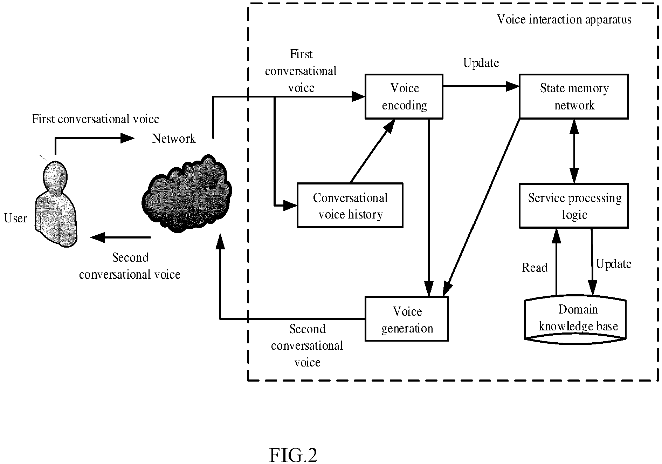

To facilitate the understanding of the embodiments of the present disclosure, a brief description of an application architecture on which the present disclosure is based is provided first. As shown in FIG. 2, in a voice interaction architecture according to the present disclosure, after the user establishes a communication connection with the voice interaction apparatus according to the embodiment of the present disclosure, the voice interaction apparatus may perform voice interaction with the user through the communication connection for information verification. For example, voice interaction with the user may be performed by phone, by a network voice call, or by a network voice message.

The voice interaction apparatus may have a plurality of rounds of conversations with the user in a single connected session. In the present disclosure, to facilitate the description and name differentiation, voice entered by the user is called "first conversational voice", and response voice (that is, voice returned to the user) generated for the voice entered by the user is called "second conversational voice". It is to be noted that determiners such as "first" and "second" involved in the present disclosure do not have restrictions on size, order and quantity, and are intended only to distinguish them by name. For example, "first conversational voice" and "second conversational voice" are intended to distinguish two pieces of voice.

After the user establishes a connection with the voice interaction apparatus, the first voice may be sent by the user or the voice interaction apparatus. If the first voice is sent by the user, it generally has no special meaning, such as "hi", "hello" or "who is speaking".

For the first voice sent by the voice interaction apparatus, preset art of speaking may be adopted. The art of speaking may be a brief introduction to a purpose of the session, for example, "Hello, this is AAA customer service and I am calling to verify your information." "AAA" may be a name of an application service or application service provider.

Alternatively, the first voice sent by the voice interaction apparatus may also go straight to the point directly according to information of the verified object. The information of the verified object may be acquired from a domain knowledge base. Taking map applications as an example, the domain knowledge base may be a POI database. The first voice sent by the voice interaction apparatus to the user may be, for example, "Is this the BBB store?" "BBB" may be the name of the store.

Both the user's voice and the voice returned to the user may be recorded as conversational voice history of the session. That is, the conversational voice history takes a session as a record range, and only the conversational voice history of the session is recorded.

For the first conversational voice from the user, the voice interaction apparatus may jointly encode the first conversational voice and the conversational voice history, and voice state Embedding obtained after encoding is sent to a state memory network to update the state memory network. The state memory network obtains Embedding of at least one preset attribute by using the voice state Embedding. Then, the Embedding of the at least one preset attribute is utilized for voice generation, so as to obtain second conversational voice for return to the user. A plurality of rounds of conversations are continued in cycles, until service processing logic is entered by using Embedding of the attributes currently memorized by the state memory network after the conversation ends. That is, information of the attributes is obtained after classification is performed according to the Embedding of the attributes, which is used as information of the verified object to update the domain knowledge base.

The steps in the above method embodiment are described in detail below. Step 101 "acquiring first conversational voice entered by a user" is described in detail first.

In this step, the acquired first conversational voice is voice from the user. The voice may be first voice sent by the user in a session, or voice entered by the user in any one of a plurality of rounds of conversations in the session. In the present disclosure, the voice entered by the user is processed in the above method procedure, to generate second conversational voice returned for the user, until the session ends.

If the method according to the present disclosure is implemented on a server side, after the user enters the first conversational voice through a user terminal, the first conversational voice may be sent to the server side through a communication connection established between the user terminal and the server side.

If the method according to the present disclosure is implemented on the user terminal, the first conversational voice entered by the user on the user terminal may be directly acquired.

Step 102 "inputting the first conversational voice into a voice interaction model, to acquire second conversational voice generated by the voice interaction model for the first conversational voice for return to the user" is emphasized below.

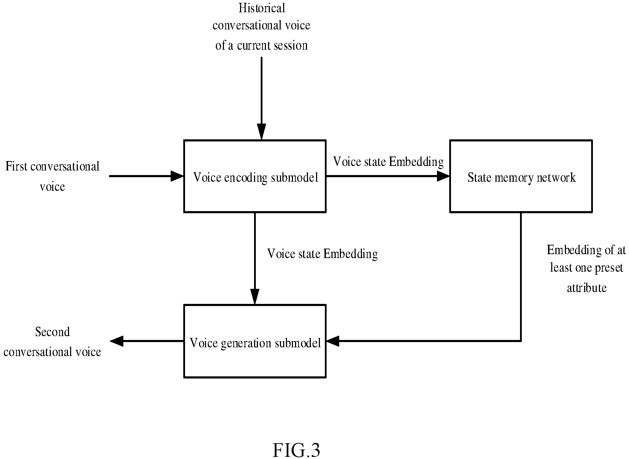

It has been mentioned above that the voice interaction model in the present disclosure is an end-to-end model, in which the second conversational voice is generated directly according to the first conversational voice entered by the user, without voice recognition on the first conversational voice. After semantic understanding of a recognized text, a reply text is generated, and then voice synthesis is performed by using the reply text. That is, the present disclosure takes a completely new approach to cause the voice interaction model to convert directly from voice to voice. As shown in FIG. 3, the voice interaction model may include a voice encoding submodel, a state memory network and a voice generation submodel. Sequence-to-sequence (seq2seq) is adopted in the overall architecture of the model.

The voice encoding submodel is configured to encode the first conversational voice and historical conversational voice of a current session, to obtain voice state Embedding.

In the embodiment of the present disclosure, the voice encoding submodel is actually an encoder. The encoder jointly encodes the first conversational voice and the historical conversational voice of the current session (excluding the first conversational voice), to obtain the voice state Embedding. The so-called Embedding is actually a vector representation.

The voice encoding submodel may be implemented by using, for example, a bidirectional Long Short-Term Memory (LSTM), a Convolutional Neural Networks (CNN), a transformer encoder, or the like.

The user's first conversational voice in this round may also be recorded in the historical conversational voice, but does not participate in the voice encoding of this round.

The state memory network is configured to obtain Embedding of at least one preset attribute by using the voice state Embedding. The at least one preset attribute is preset according to information of a verified object.

In the embodiment of the present disclosure, state information of the attribute may be memorized and updated by using a dynamic recurrent memory network. The dynamic recurrent memory network includes $m$ memory slots. Each attribute corresponds to a memory slot.

Specifically, $m$ attributes may be set according to the information of the verified object, where $m$ is a positive integer. For example, assuming that the verified object is a POI in the map application, a POI name, a POI state, opening time, closing time and other attributes may be set. The POI state may be, such as new, rename, relocate or close.

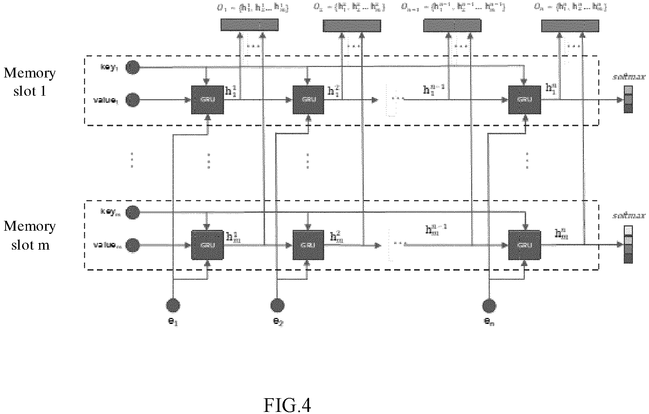

As shown in FIG. 4, memory slots in the state memory network are independent of one another, and consist of (key, value). Key is configured to identify a name of an attribute, and value is configured to store Embedding of the attribute. Each memory slot may be implemented by using a Recurrent Neural Network (RNN). Preferably, a gated RNN may be used, which is represented as a gated recurrent unit (GRU) in the figure. After the voice state Embedding is sent to the state memory network, the state memory network may update RNNs of $m$ different memory slots at the same time. Calculation of the memory slots is independent of one another, but the RNNs are updated separately during state update. In order to reduce a number of parameters, network parameters of the RNNs of the memory slots may be kept the same in the embodiment of the present disclosure. That is, a set of RNN parameters are shared.

In each round of conversion, the memory slot generates Embedding of the attribute corresponding to the memory slot by using a corresponding attribute name, the voice state Embedding and Embedding recorded in the memory slot. Then, the memory slot updates the recorded Embedding by using the generated Embedding.

As shown in FIG. 4, it is assumed that $m$ memory slots are provided. In the first conversion, a memory slot 1 generates, by using key1, voice state Embedding (expressed as $e_1$) of the first conversion and value1, Embedding of the attribute, i.e., key1, corresponding to the memory slot 1, which is expressed as $h_1^1$ . Then, the memory slot 1 records the generated Embedding. That is, value1 is updated by using the generated Embedding.

In the first conversion, a memory slot 2 generates, by using key2, voice state Embedding (expressed as $e_1$) of the first conversion and value2, Embedding of the attribute, i.e., key2, corresponding to the memory slot 2, which is expressed as $h_2^1$ . Then, the memory slot 2 records the generated Embedding. That is, value2 is updated by using the generated Embedding. The memory slot 2 is omitted and not shown in the figure.

Other memory slots are similar, and are not described in detail. Then, the state memory network outputs the $m$ Embedding generated in the current session, which is expressed as $O_1 = \{h_1^1, h_2^1, \ldots, h_m^1\}$ .

Then, in the second conversion, the memory slot 1 generates, by using key1 in the first conversation, voice state Embedding (expressed as $e_2$) of the second conversion and value1, Embedding of the attribute, i.e., key1, corresponding to the memory slot 1, which is expressed as $h_1^2$ . Then, the memory slot 1 records the generated Embedding. That is, value1 is updated by using the generated Embedding.

In the second conversion, the memory slot 2 generates, by using key2, voice state Embedding (expressed as $e_2$) of the first conversion and value2, Embedding of the attribute, i.e., key2, corresponding to the memory slot 2, which is expressed as $h_2^2$ . Then, the memory slot 2 records the generated Embedding. That is, value2 is updated by using the generated Embedding.

Other memory slots are similar, and are not described in detail. Then, the state memory network outputs the $m$ Embedding generated in the current session, which is expressed as $O_2 = \{h_1^2, h_2^2, \ldots, h_m^2\}$ .

Until the $n$th conversation, $m$ Embedding generated by the state memory network are outputted, which is expressed as $O_n = \{h_1^n, h_2^n, \ldots, h_m^n\}$ .

As can be seen, the voice state Embedding in each round is updated to the state memory network in a timely manner, so that the state memory network can capture information of attribute value changes involved in the voice conversation history.

The voice generation submodel is equivalent to a decoder, configured to generate the second conversational voice by using the voice state Embedding and the Embedding of the at least one preset attribute.

The voice generation submodel may be of a structure of a one-way RNN plus attention or a structure of a transformer decoder. In the case of attention, attention is required to be performed on output of the voice encoding submodel and output of the state memory network at the same time.

For example, by using the voice state Embedding in the first conversation, i.e., $e_1$ in FIG. 4 and Embedding of attributes outputted by the state memory network, i.e., $O_1 = \{h_1^1, h_2^1, \ldots, h_m^1\}$ in FIG. 4, the second conversational voice is generated for return to the user.

The generated second conversational voice may also be recorded in the historical conversational voice.

The rest may be deduced by analogy. Until the $n$th conversation, by using $e_n$ in FIG. 4 and Embedding of attributes outputted by the state memory network, i.e., $O_n = \{h_1^n, h_2^n, \ldots, h_m^n\}$ in FIG. 4, the second conversational voice is generated for return to the user.

If the $n$th conversation is the last conversation in the current session, Embedding of the attributes currently recorded by the memory slots are respectively sent to classification models corresponding to the attributes. The classification models may be softmax layers shown in FIG. 4. That is, $h_1^n$ recorded by the memory slot 1 is sent to the first softmax layer, to obtain a classification result of the first attribute. The classification result corresponds to verification data of the attribute. $h_m^n$ currently recorded by the memory slot $m$ is sent to the $m^{th}$ softmax layer, to obtain a classification result of the $m^{th}$ attribute. The classification result corresponds to verification data of the attribute. The classification result actually makes use of information of the attributes captured throughout the session.

For the information of the verified object, the verification data obtained after the classification may still be inaccurate. For example, it is most likely that a POI name "Yongle (in Chinese, "永乐") Supermarket" is correct. However, in some space-time scenarios, it may be "Yongle (in Chinese," 勇乐 " or " 涌乐 ", which is a homophone of "永乐") Supermarket" or the like. In order to solve this situation, the verification data may be further linked to object information in a domain knowledge base of the verified object. For example, the POI name is linked to a POI name in a POI knowledge base.

Specifically, firstly, the domain knowledge base may be pre-built. The knowledge base may include geo-location point information, including names, types, addresses, coordinates, contact information, opening time, closing time, and so on. Then, for the acquired geo-location point information, the verification data is classified to the domain knowledge base based on at least one of voice similarity, text similarity and attribute similarity, so as to link the verification data to the object information in the domain knowledge base. If the object information linked to is determined, the verification data is updated by using the determined object information. In the above classification, the verification data is classified actually by using a pre-built classifier. Categories classified by the classifier are existing geo-location points in the domain knowledge base. That is, the classifier calculates a probability that obtained verification data belongs to the existing geo-location points in the domain knowledge base. It is determined according to the probability whether the verification data is linked to the existing geo-location point in the domain knowledge base, and if yes, which existing geo-location point is specifically linked to.

For example, for the obtained verification data "Yongle (in Chinese, "永乐") Supermarket" voice, text, address, coordinate and other attribute values of the verification data are classified to the existing geo-location points in the domain knowledge base. If it is finally found that the probability of classification to "Yongle (in Chinese," 勇乐 ") Supermarket" is the highest and exceeds a preset threshold, "Yongle (in Chinese, "永乐") Supermarket" obtained by semantic understanding may be corrected to "Yongle (in Chinese," 勇乐 ") Supermarket". A Gradient Boosting Decision Tree (GBDT) algorithm may be adopted in the classification.

The verification data obtained by semantic interaction can be more accurate through the above linking.
The following is an application example for the above voice interaction method.
Assuming that information verification of POIs is required, 4 attributes are preset, and accordingly, 4 memory networks are arranged in the state memory network of the voice interaction apparatus. The 4 attributes are respectively:

M1: Is the phone right?
M2: Is business as usual?
M3: Opening hours; and
M4: Closing hours.

After establishing a communication connection with the user, the voice interaction apparatus may initiate first voice 1 by cold start according to preset art of speaking: "Hello, this is AAA customer service. Excuse me, is that BBB hotel?" The voice 1 is recorded in the conversational voice history of the current session. "AAA" is a name of a specific application service or a name of an application service provider.
Voice 2 "Yes, what can I do for you?" entered by the user is acquired. The voice 2 is recorded in the conversational voice history of the current session. In this case, implicit attribute information acquired by the voice interaction apparatus is: the phone is correct, and the information is updated to the state memory network.
The voice interaction apparatus generates voice 3 and returns it to the user: "To better enable customers to find your store on the map, we are helping you to verify that the store information registered on the map is accurate. Are you still open as usual now?" The voice 3 is recorded in the conversational voice history of the current session.
Voice 4 "Business as usual" entered by the user is acquired. The voice 4 is recorded in the conversational voice history of the current session. In this case, implicit attribute information acquired by the voice interaction apparatus is: the business is as usual, and the information is updated to the state memory network.
The voice interaction apparatus generates voice 5 and returns it to the user: "What are your specific business hours every day?" The voice 5 is recorded in the conversational voice history of the current session.
Voice 6 "We open every morning at 10 a.m." entered by the user is acquired. The voice 6 is recorded in the conversational voice history of the current session. In this case, implicit attribute information acquired by the voice interaction apparatus is: the opening time is 10 o'clock, and the information is updated to the state memory network.
The voice interaction apparatus generates voice 7 and returns it to the user: "What are your specific business hours every day?" The voice 7 is recorded in the conversational voice history of the current session.
Voice 8 "Nine o'clock" entered by the user is acquired. The voice 8 is recorded in the conversational voice history of the current session. In this case, implicit attribute information acquired by the voice interaction apparatus is: the closing time is 9 o'clock, and the information is updated to the state memory network.

The voice interaction apparatus generates voice 9 and returns it to the user: "Ok, thank you for your support of AAA; have a good life; goodbye". The voice 9 is recorded in the conversational voice history of the current session.

After the session ends, the following verification data is obtained after the attribute Embedding recorded by each memory slot in the state memory network is classified:

M1: Correct;
M2: Yes;
M3: 10; and
M4: 9.

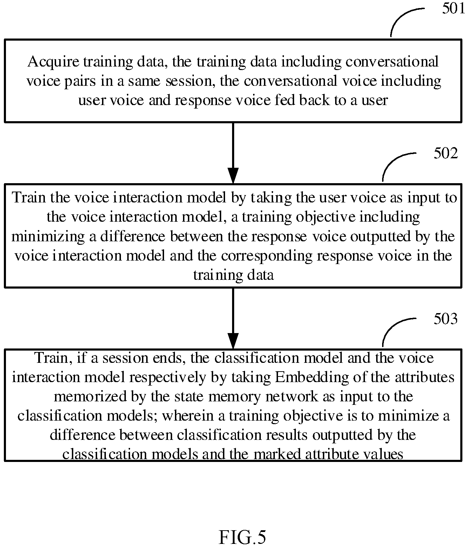

FIG. 5 is a flowchart of a method for acquiring a voice interaction model according to an embodiment of the present disclosure. The method may be performed by an apparatus for acquiring a voice interaction model. The apparatus may be an application located on a server side or a functional unit in an application located on a server side such as a plug-in or an SDK, or located in a terminal device with strong computing capability, which is not particularly limited herein in the embodiment of the present invention. If the method is performed on the server side, the server may be a single server or a server cluster composed of a plurality of servers. The server may be a cloud server. As shown in FIG. 5, the method may include the following steps.

In 501, training data is acquired, the training data including conversational voice pairs in a same session, a conversational voice pair including user voice and response voice fed back to a user.

Since a large number of call records between human customer service and a user have been accumulated in many scenarios, they may be directly used as training data for model training. The training data includes conversational voice pairs in a same session. The conversational voice pair includes user voice and response voice fed back to the user by the human customer service. In the embodiment of the present disclosure, voice fed back to the user by the human customer service is called response voice.

The conversational voice pairs in the same session are in sequence. All the conversational voice pairs prior to one conversational voice pair are historical conversational voice of the conversational voice pair.

Call records between the human customer service and the user may be used to verify the information of the verified object, such as information verification on POI data. *m* preset attributes may be preset, which may be, for example, POI names, POI states, opening time, closing time and so on. In the training data, values of the preset attributes may also be marked for each session. The values are obtained according to the content of the session in the call record.

In 502, the voice interaction model is trained by taking the user voice as input to the voice interaction model, a training objective including minimizing a difference between the response voice outputted by the voice interaction model and the corresponding response voice in the training data.

The structure of the voice interaction model is still shown in FIG. 3, which includes a voice encoding submodel, a state memory network and a voice generation submodel.

During the training, the voice encoding submodel encodes the user voice and historical conversational voice of the same session, to obtain voice state Embedding.

The state memory network obtains Embedding of at least one preset attribute by using the voice state Embedding. The structure and principle of the state memory network may be obtained with reference to the related description in the previous embodiments, which are described in detail herein.

The voice generation submodel generates the response voice by using the voice state Embedding and the Embedding of the at least one preset attribute. The preset attribute may also be preset according to information of a verified object.

In the training, a loss function may be designed according to the training objective. For example, a loss function L1 may be designed to reflect a difference between response voice outputted by the voice interaction model and response voice in training data. In each iteration, model parameters of the voice interaction model are updated by gradient descent according to the value of the loss function L1, including parameters of the voice encoding submodel, the state memory network and the voice generation submodel.

After the above training process is performed in chronological order by using the conversational voice pairs in a session in the training data, in 503, if a session ends, the classification model and the voice interaction model are trained respectively by taking Embedding of the attributes memorized by the state memory network as input to the classification models. A loss function L2 may be designed according to a training objective, i.e., minimize a difference between classification results outputted by the classification models and the marked attribute values. Model parameters of the classification model and the voice interaction model are updated by gradient descent (including at least parameters of the voice encoding submodel and the state memory network).

The model parameters of the voice interaction model may be updated first by using L1, and then the model parameters of the classification model and at least part of the voice interaction model are updated at the end of the session by using L2. A total loss function L may also be designed by using L1 and L2, and the model parameters of the classification model and the voice interaction model are updated in each iteration by using the total loss function L.

The above is a detailed description of the method according to the present disclosure, and the following is a detailed description of the apparatus according to the present disclosure in conjunction with embodiments.

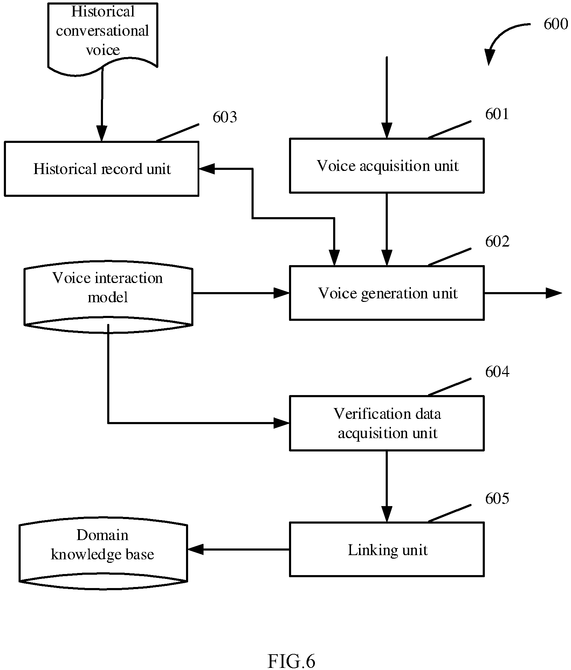

FIG. 6 is a structural diagram of an intelligent voice interaction apparatus according to an embodiment of the present disclosure. As shown in FIG. 6, the apparatus 600 may include: a voice acquisition unit 601 and a voice generation unit 602, and may further include a historical record unit 603, a verification data acquisition unit 604 and a linking unit 605. Main functions of the component units are as follows.

The voice acquisition unit 601 is configured to acquire first conversational voice entered by a user.

The voice generation unit 602 is configured to input the first conversational voice into a voice interaction model, to acquire second conversational voice generated by the voice interaction model for the first conversational voice for return to the user.

The voice interaction model includes: a voice encoding submodel, a state memory network and a voice generation submodel. The voice encoding submodel is configured to encode the first conversational voice and historical conversational voice of a current session, to obtain voice state Embedding. The state memory network is configured to obtain Embedding of at least one preset attribute by using the voice state Embedding. The voice generation submodel is configured to generate the second conversational voice by using the voice state Embedding and the Embedding of the at least one preset attribute. The at least one preset attribute is preset according to information of a verified object.

The historical record unit 603 is configured to record the first conversational voice and the second conversational voice in the historical conversational voice of the current session.

As a preferred implementation, the state memory network includes at least one memory slot, each memory slot corresponding to a preset attribute. The memory slot is configured to generate and memorize Embedding of the attribute corresponding to the memory slot by using a corresponding attribute name, the voice state Embedding and memorized Embedding.

The verification data acquisition unit 604 is configured to acquire Embedding of corresponding attributes memorized by memory slots after the current session ends; and classify the Embedding of the attributes by corresponding classification models respectively, to obtain verification data of the attributes.

The linking unit 605 is configured to link the verification data to object information in a domain knowledge base of the verified object.

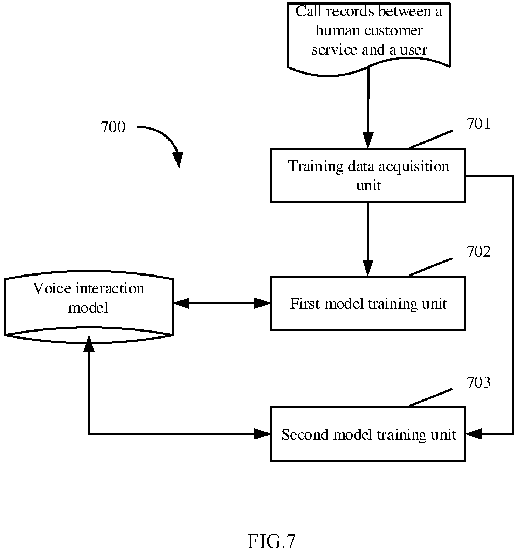

FIG. 7 is a structural diagram of an apparatus for acquiring a voice interaction model according to an embodiment of the present disclosure. As shown in FIG. 7, the apparatus 700 may include: a training data acquisition unit 701 and a first model training unit 702, and may further include a second model training unit 703. Main functions of the component units are as follows.

The training data acquisition unit 701 is configured to acquire training data, the training data including conversational voice pairs in a same session, a conversational voice pair including user voice and response voice fed back to a user.

The first model training unit 702 is configured to train the voice interaction model by taking the user voice as input to the voice interaction model, a training objective including minimizing a difference between the response voice outputted by the voice interaction model and the corresponding response voice in the training data.

The voice interaction model includes: a voice encoding submodel, a state memory network and a voice generation submodel. The voice encoding submodel is configured to encode the user voice and historical conversational voice of the same session, to obtain voice state Embedding. The state memory network is configured to obtain Embedding of at least one preset attribute by using the voice state Embedding. The voice generation submodel is configured to generate the response voice by using the voice state Embedding and the Embedding of the at least one preset attribute.

As a preferred implementation, the training data acquisition unit 701 may acquire conversational voice pairs of a same session from call records between a human customer service and the user, the conversational voice pair including user voice and response voice fed back to the user by the human customer service.

As a preferred implementation, the state memory network includes at least one memory slot, each memory slot corresponding to a preset attribute.

The memory slot is configured to generate and memorize Embedding of the attribute corresponding to the memory slot by using a corresponding attribute name, the voice state Embedding and memorized Embedding.

Furthermore, the training data may further include: values of the preset attributes marked for each session.

Correspondingly, the second model training unit 703 is configured to acquire Embedding of corresponding attributes memorized by the memory slots after the session ends; and train classification models and the voice interaction model respectively by taking the Embedding of the attributes as input to the classification models, the training objective including minimizing a difference between classification results outputted by the classification models and the marked values.

As can be seen, in the embodiment of the present disclosure, the voice interaction apparatus includes no voice recognition, semantic understanding, conversation management and emotion analysis modules. Instead, the voice returned to the user is generated directly from the user's voice in an end-to-end manner. That is, voice is inputted to the model, and the model directly outputs returned voice, which requires no dependence and cascade between a large number of models, thereby solving the problem of error accumulation.

Various embodiments in the specification are described progressively. Same and similar parts among the embodiments may be referred to one another, and each embodiment focuses on differences from other embodiments. In particular, the apparatus embodiments are basically similar to the method embodiments, so the description thereof is relatively simple. Related parts may be obtained with reference to the corresponding description in the method embodiments.

Acquisition, storage and application of users' personal information involved in the technical solutions of the present disclosure comply with relevant laws and regulations, and do not violate public order and moral.

According to embodiments of the present disclosure, the present application further provides an electronic device and a readable storage medium.

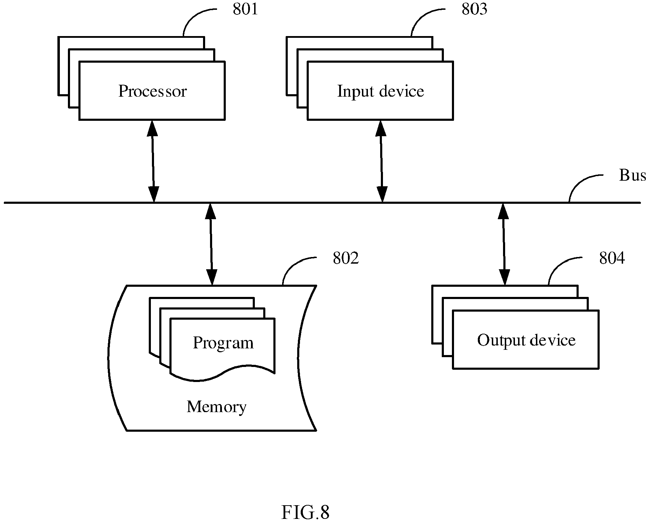

FIG. 8 is a block diagram of an electronic device configured to implement methods according to embodiments of the present disclosure. The electronic device is intended to represent various forms of digital computers, such as laptops, desktops, workbenches, personal digital assistants, servers, blade servers, mainframe computers and other suitable computing devices. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in FIG. 8, the electronic device includes: one or more processors 801, a memory 802, and an interface for connecting various components, including a high-speed interface and a low-speed interface. The components are interconnected using different buses and may be mounted on a common motherboard or otherwise installed as required. The processor may process instructions executed within the electronic device, including instructions stored in or on the memory to display graphical information of a Graphical User Interface (GUI) on an external input/output apparatus (such as a display device coupled to the interface). In other implementations, a plurality of processors and/or buses may be used together with a plurality of memories if necessary. Similarly, a plurality of electronic devices may be connected, each providing some necessary operations (for example, as an array of servers, a set of blade servers, or a multi-processor system). One processor 801 is taken as an example in FIG. 8.

The memory 802 is a non-transitory computer-readable storage medium according to the present application. The memory stores instructions executable by at least one processor, to cause the at least one processor to perform the method according to the present application. The non-transitory computer-readable storage medium according to the present application stores computer instructions. The computer instructions are configured to cause a computer to perform the method according to the present application.

The memory 802, as a non-transitory computer-readable storage medium, may be configured to store non-transitory software programs, non-transitory computer-executable programs and modules, such as the program instructions/modules corresponding to the method according to the embodiment of the present application. The processor 801 performs various functional applications and data processing of a server by running the non-transitory software programs, the instructions and the modules stored in the memory 802, that is, implement the method in the above method embodiment.

The memory 802 may include a program storage region and a data storage region. The program storage region may store applications required by an operating system and at least one function. The data storage region may store data created according to the use of the electronic device, etc. In addition, the memory 802 may include a high-speed random-access memory and may also include a non-transitory memory, such as at least one disk storage device, a flash memory device, or other non-transitory solid-state storage devices. In some embodiments, the memory 802 optionally includes memories arranged remotely relative to the processor 801. The remote memories may be connected to the electronic device over a network. Examples of the network include, but are not limited to, the Internet, an Intranet, a local area network, a mobile communication network and combinations thereof.

The electronic device may further include: an input apparatus 803 and an output apparatus 804. The processor 801, the memory 802, the input apparatus 803 and the output apparatus 804 may be connected by a bus or in other manners. A bus connection is taken as an example in FIG. 8.

The input apparatus 803 may receive inputted numeric or character information, and generate key signal inputs related to user settings and function control of the electronic device, for example, input apparatuses such as a touch screen, a keypad, a mouse, a trackpad, a touchpad, a pointer stick, one or more mouse buttons, a trackball and a joystick. The output apparatus 804 may include a display device, an auxiliary lighting device (for example, a light emitting diode (LED)), and a haptic feedback apparatus (for example, a vibration motor), and the like. The display device may include, but is not limited to, a liquid crystal display (LCD), a light emitting diode (LED) display, and a plasma display. In some implementations, the display device may be a touch screen.

Various implementations of the systems and technologies described herein can be realized in a digital electronic circuit system, an integrated circuit system, an application-specific integrated circuit (ASIC), computer hardware, firmware, software, and/or combinations thereof. Such implementations may include implementation in one or more computer programs that are executable and/or interpretable on a programmable system including at least one programmable processor, which may be special or general purpose, configured to receive data and instructions from a storage system, at least one input apparatus, and at least one output apparatus, and to transmit data and instructions to the storage system, the at least one input apparatus, and the at least one output apparatus.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, device and/or apparatus (e.g., magnetic discs, optical disks, memory, Programmable Logic Devices (PLDs)) configured to provide machine instructions and/or data to a programmable processor, including a machine-readable medium that receives machine instructions as a machine-readable signal. The term "machine-readable signal" refers to any signal configured to provide machine instructions and/or data to a programmable processor.

To provide interaction with a user, the systems and technologies described herein can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual feedback, auditory feedback, or tactile feedback); and input from the user may be received in any form (including sound input, voice input, or tactile input).

The systems and technologies described herein can be implemented in a computing system including background components (e.g., as a data server), or a computing system including middleware components (e.g., an application server), or a computing system including front-end components (e.g., a user computer with a GUI or web browser through which the user can interact with the implementation of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other.

It should be understood that the steps can be reordered, added, or deleted using the various forms of processes shown above. For example, the steps described in the present application may be executed in parallel or sequentially or in different sequences, provided that desired results of the technical solutions disclosed in the present application are achieved, which is not limited herein.

The above specific implementations do not limit the extent of protection of the present application. Those skilled in the art should understand that various modifications, combinations, sub-combinations, and replacements can be made according to design requirements and other factors. Any modifications, equivalent substitutions and improvements made within the spirit and principle of the present application all should be included in the extent of protection of the present application.

**Claims**

1. An intelligent voice interaction method, comprising:

    acquiring (101) first conversational voice entered by a user; and
    inputting (102) the first conversational voice into a voice interaction model, to acquire second conversational voice generated by the voice interaction model for the first conversational voice for return to the user;
    wherein the voice interaction model comprises:

    a voice encoding submodel configured to encode the first conversational voice and historical conversational voice of a current session, to obtain voice state Embedding;
    a state memory network configured to obtain Embedding of at least one preset attribute by using the voice state Embedding, wherein the at least one preset attribute is preset according to information of a verified object; and
    a voice generation submodel configured to generate the second conversational voice by using the voice state Embedding and the Embedding of the at least one preset attribute.

2. The method according to claim 1, further comprising:
    recording the first conversational voice and the second conversational voice in the historical conversational voice of the current session.

3. The method according to claim 1, wherein the state memory network comprises at least one memory slot, each memory slot corresponding to a preset attribute; and
the memory slot is configured to generate Embedding of the attribute corresponding to the memory slot and memorize the generated Embedding by using a corresponding attribute name, the voice state Embedding and memorized Embedding.

4. The method according to claim 1, further comprising:

acquiring Embedding of corresponding attributes memorized by memory slots after the current session ends; and
classifying the Embedding of the attributes by corresponding classification models respectively, to obtain verification data of the attributes.

5. The method according to claim 4, further comprising:
linking the verification data to object information in a domain knowledge base of the verified object.

6. The method according to any one of claims 1 to 5, wherein information of the verified object comprises geo-location point information.

7. A method for acquiring a voice interaction model, comprising:

acquiring (501) training data, the training data comprising conversational voice pairs in a same session, a conversational voice pair comprising user voice and response voice fed back to a user; and
training (502) the voice interaction model by taking the user voice as input to the voice interaction model, a training objective comprising minimizing a difference between the response voice outputted by the voice interaction model and the corresponding response voice in the training data; wherein the voice interaction model comprises:

a voice encoding submodel configured to encode the user voice and historical conversational voice of the same session, to obtain voice state Embedding;
a state memory network configured to obtain Embedding of at least one preset attribute by using the voice state Embedding, wherein the at least one preset attribute is preset according to information of a verified object; and
a voice generation submodel configured to generate the response voice by using the voice state Embedding and the Embedding of the at least one preset attribute.

8. The method according to claim 7, wherein the step of acquiring training data comprises:

acquiring conversational voice pairs of a same session from call records between a human customer service and the user, the conversational voice pair comprising user voice and response voice fed back to the user by the human customer service.

9. The method according to claim 7, wherein the state memory network comprises at least one memory slot, each memory slot corresponding to a preset attribute; and
the memory slot is configured to generate and memorize Embedding of the attribute corresponding to the memory slot by using a corresponding attribute name, the voice state Embedding and memorized Embedding.

10. The method according to any one of claims 7 to 9, wherein the training data further comprises: values of the preset attributes marked for each session; and
the method further comprises:

acquiring Embedding of corresponding attributes memorized by the memory slots after the session ends; and
training classification models and the voice interaction model respectively by taking the Embedding of the attributes as input to the classification models, the training objective comprising minimizing a difference between classification results outputted by the classification models and the marked values.

11. An intelligent voice interaction apparatus (600), comprising:

a voice acquisition unit (601) configured to acquire first conversational voice entered by a user; and
a voice generation unit (602) configured to input the first conversational voice into a voice interaction model, to acquire second conversational voice generated by the voice interaction model for the first conversational voice for return to the user;
wherein the voice interaction model comprises:

a voice encoding submodel configured to encode the first conversational voice and historical conversational voice of a current session, to obtain voice state Embedding;
a state memory network configured to obtain Embedding of at least one preset attribute by using the voice state Embedding, wherein the at least one preset attribute is preset according to information of a verified object; and

a voice generation submodel configured to generate the second conversational voice by using the voice state Embedding and the Embedding of the at least one preset attribute.

12. An apparatus (700) for acquiring a voice interaction model, comprising:

a training data acquisition unit (701) configured to acquire training data, the training data comprising conversational voice pairs in a same session, a conversational voice pair comprising user voice and response voice fed back to a user; and

a first model training unit (702) configured to train the voice interaction model by taking the user voice as input to the voice interaction model, a training objective comprising minimizing a difference between the response voice outputted by the voice interaction model and the corresponding response voice in the training data; wherein the voice interaction model comprises:

a voice encoding submodel configured to encode the user voice and historical conversational voice of the same session, to obtain voice state Embedding;

a state memory network configured to obtain Embedding of at least one preset attribute by using the voice state Embedding, wherein the at least one preset attribute is preset according to information of a verified object; and

a voice generation submodel configured to generate the response voice by using the voice state Embedding and the Embedding of the at least one preset attribute.

13. An electronic device, comprising:

at least one processor; and
a memory in communication connection with the at least one processor; wherein
the memory stores instructions executable by the at least one processor, and the instructions are executed by the at least one processor to enable the at least one processor to perform the method according to any one of claims 1 to 10.

14. A non-transitory computer-readable storage medium storing computer instructions, wherein the computer instructions are configured to cause a computer to perform the method according to any one of claims 1 to 10.

15. A computer program product, comprising a computer program, wherein, when the computer program is executed by a processor, the method according to any one of claims 1 to 10 is performed.

101

Acquire first conversational voice entered by a user

102

Input the first conversational voice into a voice interaction model, to acquire second conversational voice generated by the voice interaction model for the first conversational voice for return to the user, wherein the voice interaction model includes: a voice encoding submodel, a state memory network and a voice generation submodel; the voice encoding submodel is configured to encode the first conversational voice and historical conversational voice of a current session, to obtain voice state Embedding; the state memory network is configured to obtain Embedding of at least one preset attribute by using the voice state Embedding; and the voice generation submodel is configured to generate the second conversational voice by using the voice state Embedding and the Embedding of the at least one preset attribute; wherein the at least one preset attribute is preset according to information of a verified object

FIG.1

FIG.2

Historical
conversational voice
of a current session

First conversational
voice
→ Voice encoding submodel — Voice state Embedding → State memory network

Voice state Embedding

Embedding of at
least one preset
attribute

Second
conversational voice
← Voice generation submodel ←

FIG.3

FIG.4

501

Acquire training data, the training data including conversational voice pairs in a same session, the conversational voice including user voice and response voice fed back to a user

502

Train the voice interaction model by taking the user voice as input to the voice interaction model, a training objective including minimizing a difference between the response voice outputted by the voice interaction model and the corresponding response voice in the training data

503

Train, if a session ends, the classification model and the voice interaction model respectively by taking Embedding of the attributes memorized by the state memory network as input to the classification models; wherein a training objective is to minimize a difference between classification results outputted by the classification models and the marked attribute values

FIG.5

FIG.6

Call records between a
human customer
service and a user

700

Training data acquisition
unit                                    701

Voice interaction
model          ←→     First model training unit     702

Second model training unit     703

FIG.7

801

803

Processor

Input device

Bus

802

804

Program

Memory

Output device

FIG.8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2021 0087098 A (BAIDU ONLINE NETWORK TECHNOLOGY BEIJING CO LTD [CN]) 9 July 2021 (2021-07-09) * the whole document * & EP 3 940 693 A1 (BAIDU ONLINE NETWORK TECHNOLOGY BEIJING CO LTD [CN]) 19 January 2022 (2022-01-19) ----- | 1-15 | INV. G06F40/216 G06F40/35 G10L15/22 |
| A | US 10 929 614 B2 (IBM [US]) 23 February 2021 (2021-02-23) * Summary; figure 1 * ----- | 1-15 | |

TECHNICAL FIELDS
SEARCHED (IPC)

G06F
G10L

The present search report has been drawn up for all claims

| Place of search | Date of completion of the search | Examiner |
|---|---|---|
| The Hague | 14 September 2022 | Scappazzoni, E |

EPO FORM 1503 03.82 (P04C01)

## ANNEX TO THE EUROPEAN SEARCH REPORT
## ON EUROPEAN PATENT APPLICATION NO.

EP 22 16 4719

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2022

| Patent document cited in search report | Publication date | Patent family member(s) | Publication date |
|---|---|---|---|
| KR 20210087098 A | 09-07-2021 | EP 3940693 A1 | 19-01-2022 |
| | | JP 2022537000 A | 23-08-2022 |
| | | KR 20210087098 A | 09-07-2021 |
| US 10929614 B2 | 23-02-2021 | NONE | |

EPO FORM P0459

For more details about this annex : see Official Journal of the European Patent Office, No. 12/82